# EUROPEAN PATENT SPECIFICATION

(11) **EP 0 226 284 B1**
(45) Date of publication and mention of the grant of the patent: **29.09.1993**
(21) Application number: 86307572.7
(22) Date of filing: 01.10.1986
(51) Int. Cl.: C02F 1/46, F24F 6/00

(54) **Water recirculating apparatus and method**
Vorrichtung und Verfahren für die Rückführung von Wasser
Dispositif et procédé de recyclage d'eau

(30) Priority: 01.10.1985 GB 8524155
(43) Date of publication of application: 24.06.1987
(73) Proprietor: SAFETY FIRST LIMITED, London SW15 4JJ (GB)
(72) Inventor: Swift, Thomas Richard, Roehampton London SW18 (GB); Desty, Dennis Henry, Walton-On-Thames Surrey (GB)
(74) Representative: Senhenn, Derek Alan

(56) References cited:
- EP-A- 0 114 364
- WO-A-82/03381
- BE-A- 527 961
- DE-A- 1 517 512
- DE-A- 3 406 831
- US-A- 2 657 179
- US-A- 3 382 171
- US-A- 4 295 343
- US-A- 4 525 253

## Description

### Technical Field

This invention relates to water recirculating apparatus, and to a means for and a method of controlling the dissemination by such apparatus of bacteria and other organisms which give rise to respiratory diseases in human beings.

### Background Art

The art of preventing or reducing the occurrence of disease caused by bacteria and other organisms which are ingested into the **alimentary canal** of human beings is well developed, and the toxic effects of certain metal ions carried in suspension in water are known in this connection.

Whilst there has been considerable investigation into the germicidal properties of electrolised **silver** ions carried in suspension in water, such investigation has been directed towards the development of systems for purifying **drinking water, or water that is otherwise likely to be ingested into the human stomach, e.g. swimming pool water.** Thus, work done so far has concentrated on the effects of silver ions on **coliform bacteria** concentrations which arise from faecal contamination of water.

Our researches have established that **silver** ions carried in suspension in water in appropriate concentrations are effective to kill or otherwise render innocuous bacteria and other organisms that cause **respiratory diseases** in human beings. Such bacteria include, inter alia, those known as **Legionella Pneumophila**, and their relatives, which bacteria cause the newly-recognised respiratory disease known as **Legionaires Disease**.

That disease of the human body is particularly hazardous to elderly people, and to sick people, and is caused by the penetration of the bacteria, Legionella Pneumophila, deep within the passageways of the human lungs, into the alveoli, where they multiply, and also gain access to the bloodstream via the fine blood vessels that line the walls of the alveoli for the purpose of receiving oxygen from air breathed into the lungs. The passageways (bronchial tubes and bronchioles) which communicate with the alveoli are lined with mucus.

We have established that the bacteria Legionella Pneumophila have the following characteristics:-
(a) they survive only in a water environment;
(b) they die if deprived of that environment;
(c) they can be taken into the human **alimentary canal** and will pass therethrough without causing any harm;
(d) they give rise to Legionnaire's disease by gaining access to and multiplying in the small air sacs (alveoli) in the lungs, in which sacs the normal process of oxygenation of the blood occurs;
(e) they can enter the human bloodstream via the blood vessels which line the alveoli, and be carried in the bloodstream to other parts of the body where they do harm;
(f) they are impeded by the mucus which lines the air passages (bronchial tubes and bronchioles) which lead to the alveoli; and
(g) they can enter the alveoli only by being carried in very small **droplets of water** (less that 10 µm in diameter) which are small enough to pass through the passages leading to the alveoli without colliding with and being absorbed into the mucus lining those passages.

Metal ions can be conveniently introduced into water by passing it through an ionising chamber in which a pair of metal or metal alloy electrodes are spaced apart and energised by a suitable alternating or uni-directional electrical potential.

It has been found that water having **silver** ions so introduced in concentrations of less than one part in ten million parts of water (by wt) constitutes a lethal environment for respiratory disease causing bacteria such as **Legionella Pneumophila**. It has also been found that water having ions of copper or zinc so introduced in concentrations of less than one part per million parts of water (by wt) consitutes a lethal environment for photo-synthesising and other organisms which assist in the development of Legionella Pneumophila. The combined effect of the two ion types inhibits the growth of bacteria and other organisms which give rise to Pontiac and Humidifier fevers.

Respiratory diseases most frequently arise from the direct invasion of the lungs by the relevant organisms carried in **inhaled breath**.

Certain types of apparatus which employ water as a working fluid medium provide an advantageous environment for the multiplication of such respiratory disease causing organisms, and moreover provide a means of disseminating such organisms into the atmospheric air. Such apparatus have the following characteristics:-
(a) they each incorporate a **water recirculation system** in which water is continuously recirculated, with the losses being made up by the admission of make-up water;
(b) they each include an **air exposure zone** through which the circulating water passes in direct contact with atmospheric air; and
(c) in that zone the water **impinges** on one or more solid surfaces, which surfaces may be stationary or moving, at an impact velocity that is large enough to cause small water droplets (of sizes down to three microns diameter) to be ejected from the water into the atmospheric air.

Such water recirculating apparatus include the following:-
(1) fountains and artificial waterfalls, both indoors and outdoors;
(2) water cooling apparatus in which evaporation of the continuously recirculated water is used to provide **cooling** of the circulated water; and
(3) air humidifying apparatus in which evaporation of the continuously recirculated water is used to **humidify** a flow of atmospheric air.

In such **water cooling** apparatus of the kind referred to at (2) above, the recirculated water also passes through a heat source whereby to extract heat therefrom. As an example, such a heat source may comprise a heat exchanger of a refrigeration unit, which unit may itself comprise part of an air conditioning plant, for example for a building. Alternatively, the heat source may comprise a steam condenser as used for example in conjunction with a steam driven electric power generation plant, the circulated water being passed through the cooling water circuit of the steam condenser.

In each of those two applications, the recirculated water absorbs heat from the heat source, and is itself cooled by evaporation in an atmospheric air flow in said air exposure zone, before being recirculated to absorb further waste heat from the heat source.

In such applications, the pipework for carrying the circulating water from the heat source to the said air exposure zone works at temperatures that are particularly conducive to the multiplication of such respiratory disease causing organisms. Such organisms thus colonise the interior of that pipework, and moreover travel with the water leaving that pipework, so that they can escape into the atmospheric air flowing in said air exposure zone.

Thus, there is a high risk that water entering the said air exposure zone will carry into it Legionella Pneumophila bacteria, and also other bacteria and organisms (such as protozoa, algae, and slime moulds - with which organisms the bacteria Legionella Pneumophila symbiotically associate) that also colonise those warm pipework parts and travel in the water leaving that pipework.

Likewise, there is a high risk that Legionnaire Pneumophila bacteria, in particular, will be emitted from such zone in water droplets that are carried away in the exiting atmospheric air flow, and that many of such droplets are of, or will evaporate down to, the aforesaid small size at which they are able to penetrate the alveoli of people who breathe in atmospheric air coming from the exit ducts of such apparatus.

Similarly, other water droplets of appropriate size may carry away from said zone other bacteria and organisms which can give rise to Pontiac fever and/or Humidifier fever in those persons who inhale those water droplets present in humidified atmospheric air leaving said zone.

In many present day water re-circulating apparatus which have been used to **cool** the circulating water by evaporation in the air exposure zone, reliance has been placed upon the injection of toxic chemicals (such as chlorine and its compounds, and more recently and expensively, ozone) into the circulating water in order to control and limit the growth of bacteria (and organisms which may aid their growth) and of organisms which by their clogging effect may tend to impede the operation of the overall system.

Such chemicals give rise to additional expense, and also problems in their use, since they can evaporate, degrade on contact with sunlight and organic material, and being sometimes highly reactive attack the pipework and mechanisms of the system. Such expense arises from the costs of providing the chemicals and the means for injecting them automatically, and the additional maintenance that arises from their use. If manual injection is relied upon, there is the additional hazard of infection in the event that the injection timetable is not strictly adhered to.

A further problem arises in that hazardous chemicals will be present in the bleed-off water, which may find its way into a variety of collection points from which water intended for human or animal use is obtained.

Because of the difficulties which arise from the use of toxic chemicals to prevent the growth of undesirable bacteria and other organisms, there has been a move away from the use of such evaporative water cooling systems in relation to air conditioning systems for buildings, in favour of alternative, **more expensive** water cooling systems in which the water to be cooled is passed through a heat exchanger which comprises an enclosed water circuit over which atmospheric air is blown so as to cool the water flowing through that circuit. In such systems the water has no opportunity to come into direct contact with the atmospheric air so that no air-borne, bacteria-carrying water droplets can be formed.

In **air humidifiers** of the kind referred to at (3) above, there is a similar risk of disseminating in an atmospheric air flow respiratory disease producing bacteria and other organisms carried in small water droplets. Such humidifiers may be of the kind in which evaporation takes place in water falling freeely over slats or baffles, or of the kind in which a stream of water is caused to impinge on the surface of a spinning disc whereby to break up the water flow into a series of small water droplets.

The present invention seeks to provide a means for and a method of reducing the infectivity of the unwanted but unavoidable small water droplets present in the output air flow of such water recirculating apparatus, which means and method do not rely on the injection of toxic chemicals to control the growth of undesirable bacteria and other organisms in the circulating water.

We are aware of a prior proposal (see US patent specification 4,525,253 - Hayes et al, published 25.6.85) to use, in a water purifying means for a swimming pool or other water reservoir, a metal ion release means for simultaneously releasing ions of silver, copper and nickel from similar, metal alloy electrodes, in an endeavour to kill coliform bacteria and render that body of water **potable**, the water being circulated for that purpose from the reservoir to an external purifying device and back to the reservoir **solely** for effecting the desired purification.

We are also aware of prior patent specification WO82/03381 (MEDICHEM AG/GAUTSCHI ET AL) published 14.10.82 and the corresponding specification AU-B-82098/82, in which there is disclosed a means of treating water so as to maintain it **potable** over very long periods of time. Such means comprise low solubility silver compounds which are compressed to a very high degree thereby to render the rate of release of silver ions very low. An initial activating process (e.g. by heating momentarily) ensures an initial high rate of silver ion release thereby to disinfect a charge of water that is to be stored. The subsequent low rate of release of silver ions is sufficient to maintain the water potable over the desired long periods. That specification instances various fields of application of the disclosed disinfecting treatment, but they all relate to areas of activity in which the objective is that of rendering and maintainting a body of water **potable**, so that diseases of the human alimentary canal will not result from ingestion or use of the stored water after long periods.

None of those prior art specifications (nor any other known to the Applicant) relates to, or refers to (a) the bacterium Legionella Pneumophila, (b) the disease known as Legionaires disease, or (c) any other respiratory disease of human beings.

Moreover, in that prior specification AU-B-82098/82 the first complete paragraph of page 8 reads as follows: "It is recommended that the water, treated by the moulded articles specified in this invention, be kept in containers made of plastics, ceramics, glass or noble metals such as silvers and/or those should be lined with these materials. This is necessary to prevent the disturbance on the oligodynamic action of the silver ions by reaction with other electro-negative metals."

The present invention is concerned with an apparatus of the kind comprising:
(a) a water discharge means for discharging water into an evaporation zone through which atmospheric air may flow in contact with said water to thereby effect evaporation therefrom;
(b) means for breaking up the discharging water flow so as to release into the surrounding air droplets of water including, inter alia, fine water droplets of ten micro-meters or less diameter, thereby to increase the free water surface area available for evaporation;
(c) means for causing a forced flow of atmospheric air through said zone, which flow carries water droplets away from said zone;
(d) collection means for collecting unevaporated water exiting from said zone;
(e) duct means interconnecting said collection means and said discharge means; and
(f) pump means connected in said duct means for returning water from said collecting means through said duct means to said discharge means.

### Disclosure of the Invention

According to one aspect of the present invention, such an apparatus is **characterised in that** there is provided - (g) an infectivity reducing means arranged to reduce the aerial dissemination from said evaporation zone of infective bacteria which if inhaled by human beings cause Legionnaires disease and other related respiratory diseases, which infectivity reducing means comprises: (i) an electrolytic ion-generating means connected in that part of the apparatus comprising said duct means and said discharge means and arranged to carry water flowing towards said discharge means through said part, and (ii) controllable electrical switching means for connecting said ion generating means with a source of uni-directional or oscillating electric potential, thereby to cause said ion generating means to electrolytically release into water flowing therethrough silver ions at a release rate sufficient to produce in water leaving the discharge means a predetermined concentration of silver ions sufficient to kill or render innocuous, particularly in any fine water droplets that escape from said zone, said respiratory disease causing bacteria, thereby to render non-dangerous to human beings any respiratorily inhaled fine water droplets that have escaped from the apparatus.

Preferred optional features of the present invention include the following: (a) the ion generating means is connected in said duct means adjacent to and upstream of said discharge means; (b) the duct means includes a main duct and a by-pass duct connected in parallel relationship with the main duct, and the ion generating means is connected in at least one of said main and by-pass ducts; (c) the duct means comprises a metal duct means; (d) the ion generating means is also arranged to release into the flowing water ions of at least one of the metals copper and zinc, at a release rate sufficient to produce in water leaving the discharge means a predetermined concentration of ions of that metal sufficient to kill or render innocuous algae, slime mould and/or other organisms which assist the development of the bacteria Legionella Pneumophila; (e) the ion generating means comprises a chamber connected in serial manner in said duct means, at least one pair of opposed, metal electrode systems spaced apart in the chamber, and electrical connection means for connecting the electrode systems with the switching means; (f) the apparatus includes a make-up water pipe for supplying make-up water to the apparatus, and a means disposed in serial relation with the make-up water pipe, for removing undesirable materials comprising at least one from a group including phosphates, sulphides and chlorides from make-up water flowing therethrough into the apparatus; (g) the ion generating means is connected in said duct means, and there is included in the duct means downstream of the ion generating means an ion exchange column which incorporates ion exchange resin beads of a pore size suitable for holding released metal ions in readiness for their attachment to bacteria or other organisms present in the water flowing through that column; and (h) the apparatus includes monitoring means for monitoring the pH value of the water circulating in the apparatus, and means responsive to an output signal of the monitoring means and operative automatically to admit correcting quantities of an acid or an alkali as required into the circulating water in a manner such as to maintain the monitored pH value substantially at a preset value.

In one field of application, an apparatus according to the present invention constitutes a vaporising unit of an air humidifying plant. In such a unit the flow of atmospheric air through the evaporating zone is humidified by water vapour evaporated from the water passing through said zone and is discharged from that zone as an humidified air output of the humidifying plant.

In another field of application, an apparatus according to the present invention includes a heat source connected in said duct means. Heat from that source is extracted by water flowing through said duct means, and that heat is dissipated from said water by evaporation in said evaporation zone. Such a heat source may comprise a heat exchanger which constitutes part of a refrigeration unit, and said unit may in turn constitute part of an air conditioning unit.

In yet another field of application, the heat source comprises a water cooling circuit of a steam condensing unit having a steam flow circuit through which steam is passed in contact with said water cooling circuit thereby to transmit heat from said steam to water flowing in said cooling circuit and thereby condense the steam.

The means for breaking up the discharging water may comprise an impingement surface means against which the discharging water is caused to impinge. Such impingement surface means may comprise a series of spaced, overlapping, mutually-inclined, stationary slats against which the discharging water successively impinges. Alternatively, the means for breaking up the discharging water may comprise at least one moving solid surface on to which the discharging water is directed by the discharging means. Such a moving surface may comprise a surface of a rotating disc.

The present invention is also concerned with a method of operating a water recirculating apparatus, which method includes the steps of:-
(a) discharging a recirculating flow of water into an evaporation zone through which atmospheric air may pass in contact with the discharging water;
(b) breaking up the flow of discharging water in said zone so as to release into the surrounding air droplets of water including, inter alia, fine water droplets of ten micro-meters or less diameter thereby to increase the free water surface area available for evaporation;
(c) causing a forced flow of atmospheric air through said zone, which flow carries water droplets away from said zone; and
(d) collecting unevaporated water exiting from said zone and recirculating it through duct means for re-use in step
(a) above.

According to a second aspect of the present invention, such a method is **characterised by:**
(e) infectivity reducing steps arranged to reduce the aerial dissemination from said evaporation zone of infective bacteria which if inhaled by human beings cause Legionnaires disease and other related respiratory diseases, which infectivity reducing steps comprise -
   (i) passing the recirculating water before its re-use in said step (a) through an electrolytic ion-generating means;
   (ii) energising the ion generating means from a source of uni-directional or oscillating electric potential thereby to cause the ion generating means to release into the recirculating water silver ions at a release rate sufficient to produce in water being discharged into the evaporation zone a predetermined concentration of silver ions sufficient to kill or render innocuous, particularly in any fine water droplets that escape from said zone, said respiratory disease causing bacteria, thereby to render non-dangerous to human beings any respiratorily inhaled fine water droplets that have escaped from said zone.

Preferably, said method includes in addition the step of causing the ion generating means to electrolytically release ions of at least one of the metals copper and zinc into the flowing water at a release rate sufficient to produce in water being discharged into the evaporation zone a predetermined concentration of ions of that metal sufficient to kill or render innocuous algae, slime mould and other organisms which assist the development of the bacteria Legionella Pneumophila.

Preferably, said method also includes the steps of supplying make-up water, treating that make-up water so as to substantially remove therefrom undesirable materials comprising at least one from a group comprising phosphates, sulphides and chlorides, and feeding the treated make-up water into the recirculating water.

Other features of the present invention will appear from a reading of the description that follows hereafter and of the claims appended at the end of that description.

One evaporative, water recirculating apparatus, and various modified forms thereof, all according to the present invention will now be described by way of example and with reference to the accompanying diagrammatic drawings.

### Brief Description of the Drawings

In the drawings:-
**Figure 1** shows schematically the arrangement of the principal components constituting a typical prior art, water recirculating, evaporative cooling apparatus to which the present invention may be advantageously applied;
**Figure 2** shows schematically the arrangement of the principal components of a prior art water cooling tower of the forced-draught, evaporative type, in which a transverse flow of atmospheric air is provided by a motor-driven fan;
**Figure 3** shows schematically the arrangement of the principal components of a prior art water cooling tower of the induced-draught, evaporative type, in which a vertical flow of atmospheric air is thermally induced in a vertical, venturi-shaped tower;
**Figure 4** shows schematically the arrangement of the principal components of the said water recirculating, evaporative cooling apparatus according to the present invention;
**Figure 5** shows schematically the constructional arrangement of an ion releasing means incorporated in the apparatus shown in the Figure 4;
**Figure 6** shows schematically the constructional arrangement of one ion exchange resin column incorporated in the apparatus shown in the Figure 4; and
**Figure 7** shows schematically the arrangement of the principal components of an humidifier embodying the present invention for humidifying atmospheric air that is to be circulated in a building, which apparatus comprises an evaporative apparatus through which water flows continuously, and in which the water is continuously evaporated in a flow of said atmospheric air.

### Modes of carrying out the Invention

Referring now to the drawings:

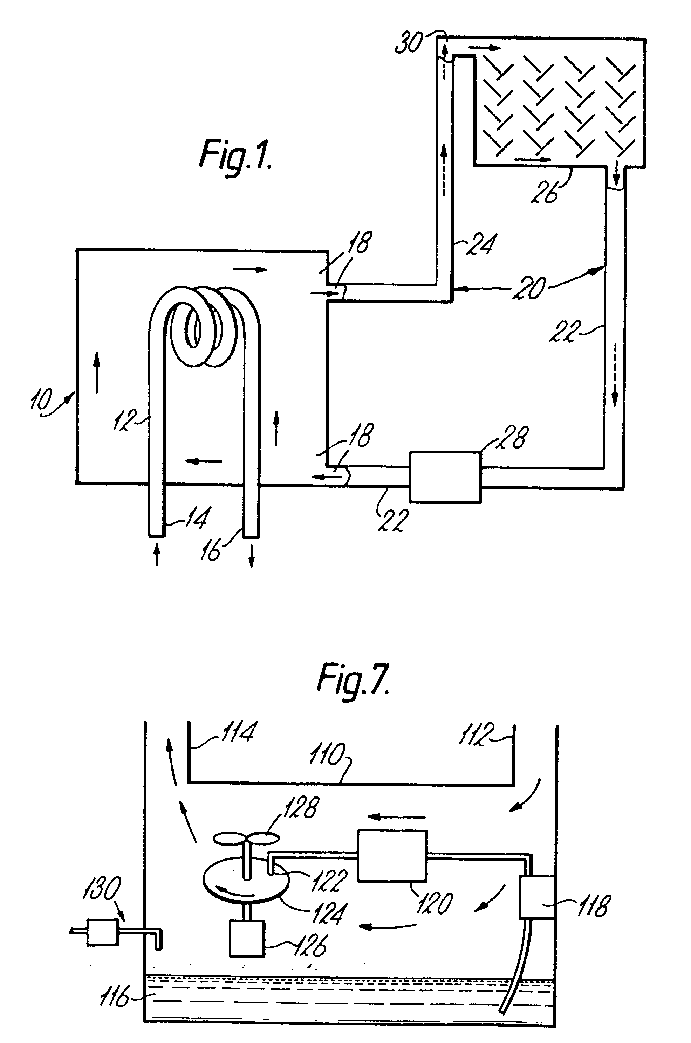

**Figure 1** depicts the schematic arrangement of a typical water recirculating, evaporative cooling apparatus to which the present invention may be advantageously applied. In that apparatus, a heat exchanger 10 (i.e. a heat source) has a primary or heat input flow circuit 12 which is connected at 14, 16 to receive hot water (or other liquid) from an independent heat source, e.g. a steam turbine condenser (not shown), and a secondary or cooling water flow circuit 18 which is connected in a closed water circulation system 20. That system includes pipework 22, 24 which connects in serial relationship the heat exchanger 10, an evaporative type water cooling unit 26, and a circulation pump 28 for returning water exiting from the water cooling unit to the heat exchanger secondary circuit 18, and thence to a discharge means 30 for discharging it again into the upper part of the water cooling unit 26.

Heat received by the circulating cooling water as it passes through the secondary circuit 18 of the heat exchanger 10 is dissipated in the cooling unit 26 by evaporation from the free surfaces of that cooling water when exposed in the atmospheric air that is caused to flow through the cooling unit.

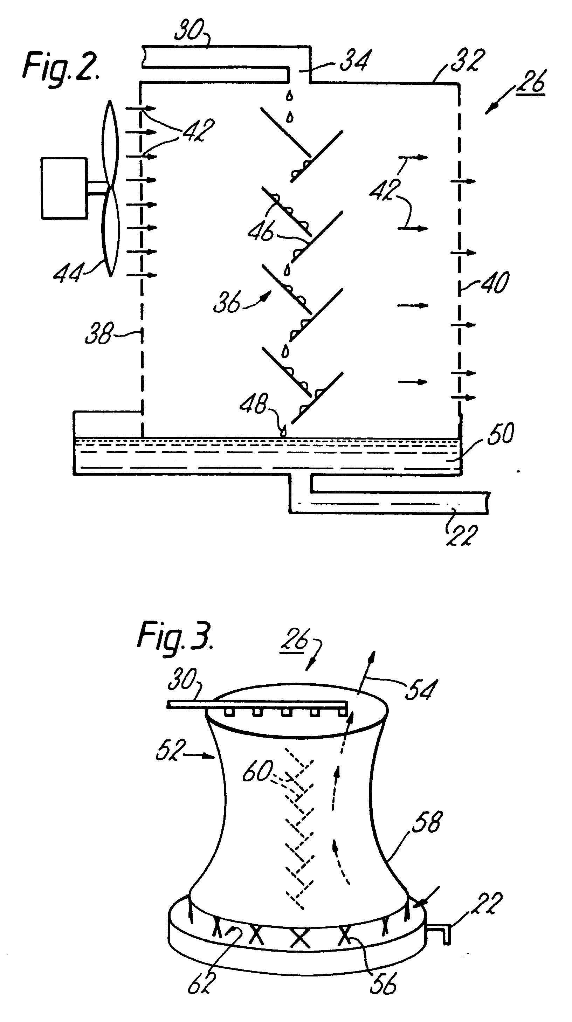

The cooling unit 26 may take any convenient form. For example, it may comprise a cooling tower of the kind shown in **Figure 2**, in which the hot water feed pipe 30 discharges hot water into the top of a rectanglar tower structure 32 through a series of discharge nozzles 34 (one only being shown) on to a plurality of arrays 36 of vertically-spaced, mutually-inclined slats or baffles. For the sake of simplicity, only one such array is shown, and that is seen in end view.

The tower structure has apertured side walls 38, 40 through which a transverse flow of atmospheric air 42 is forced by one or more motor driven fans 44. The flow of water discharged into the top of the tower is broken up as it descends, so as to increase its free surface area available for evaporation, by impingement on successive, oppositely-directed baffles 46. Small droplets of water are released into the atmospheric air flow, on impingement of the descending water on successive baffles, along with water vapour evaporated from the descending water.

The unevaporated water 48 leaving the lowermost baffles falls into a collector tray 50 from which it exits through the pipework 22 to the pump 28.

Alternatively, the cooling unit 26 may comprise a conventional venturi-shaped concrete tower 52 of the kind illustrated in the **Figure 3**, and commonly seen in association with steam-powered, electric power generating stations. In such a tower, the thermally-induced atmospheric air flow 54 is directed vertically upwards, having entered between the legs 56 which support the tower shell 58, and flowing away at the top of the shell. That upward air flow runs counter to the downward flow of water that is being discharged into the tower at the top (or at an intermediate height) from the discharge means 30.

The downward flow of hot water is broken up (as in the case of the cooling tower shown in the Figure 2) by a plurality of arrays of vertically-spaced, oppositely directed slats or baffles 60. Again, in addition to the release of water vapour into the upward flow of atmospheric air, each impingement of the water flow onto a next baffle 60 releases small water droplets into that air flow. The tower shell 58 stands above a collection pond 62 into which unevaporated water falls and from which it is drawn, by the pump 28, through the pipework 22 for recirculation through the secondary flow circuit 12 of a steam condensing unit 10 of a steam turbine (not shown), and thence to the multi-nozzled discharge means 30 at the top of the cooling tower.

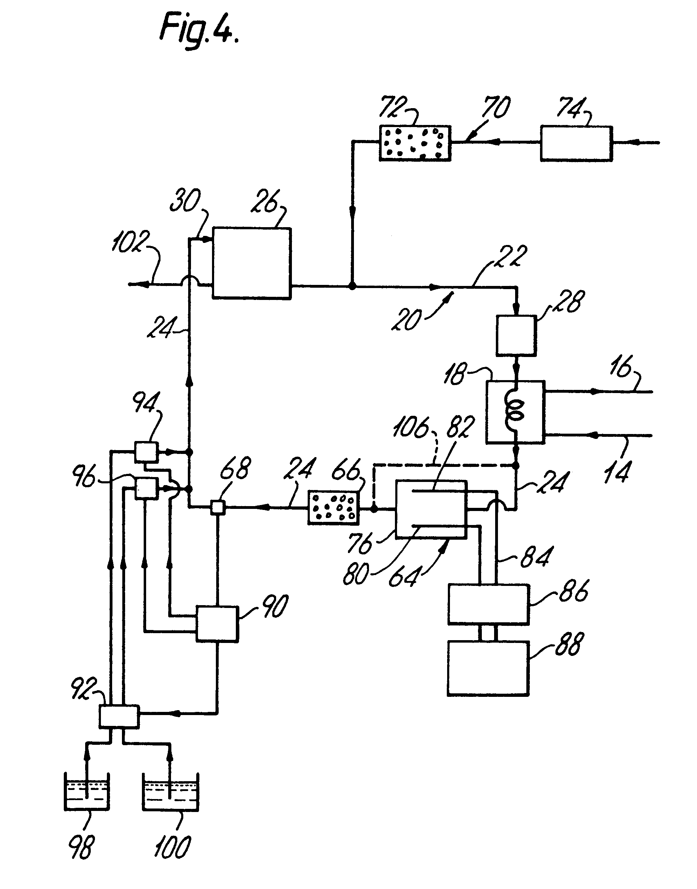

The apparatus according to the present invention comprises in one particular form (a) a recirculating, evaporative water cooling apparatus as described with reference to the Figure 1, and the associated Figure 2 or Figure 3, and (b) certain additional items which will now be referred to in connection with the apparatus shown in the **Figure 4**. In that figure, components which have counterparts in the Figures 1 to 3 bear the respective reference numbers assigned to the respective counterparts in those earlier figures.
In Figure 4, the water circulation circuit 20 includes in serial relationship a pump 28, a heat exchanger 18, an evaporative cooling unit 26, and - connected in the relatively warm pipework 24 that interconnects the heat exchanger and the cooling unit - a decontaminating unit 64, and ion exchange resin column 66, and a pH monitor 68.

A make-up water supply circuit 70 is connected to the pipe 22 which interconnects the outlet of the cooling unit 26 and the intake of the pump 28, and includes in series relationship a system of ion exchange resin columns 72, and a pre-filter 74.

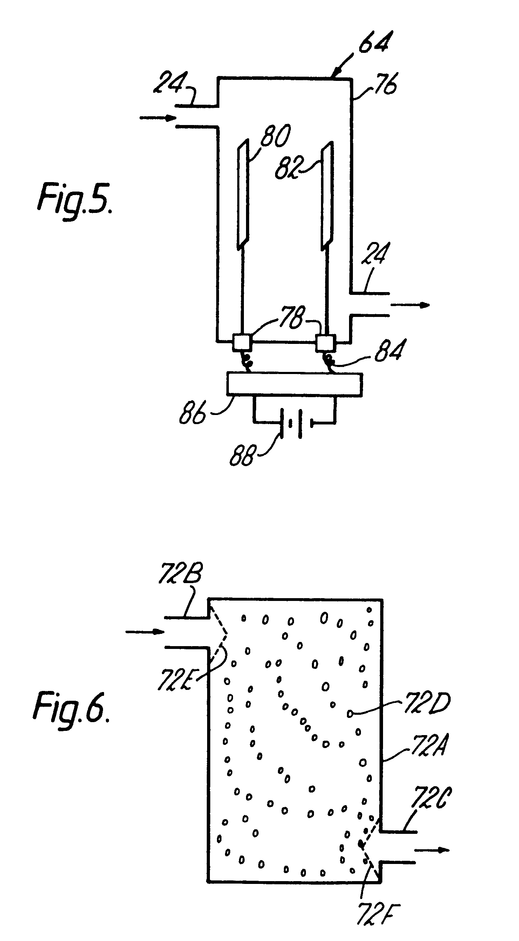

The decontaminating unit 64 comprises, in its simplest form as shown in the **Figure 5**, a chamber 76 through which the water of the circulation circuit 20 passes, and secured in the base of that chamber in electrically-insulating bushes 78 a pair of opposed metal alloy electrodes 80, 82, which are energised through conductors 84 and a polarity reversing switch 86 from a DC supply source 88. The electrodes comprise an alloy of silver, with copper or zinc, or copper and zinc as desired.

The pH monitor 68 supplies its output signal to a control unit 90 which is arranged to control in a closed loop manner an acid/alkali selector valve 92 and a pair of associated pumps 94, 96 whereby to cause as required a corrective injection of an acid from a reservoir 98, or of an alkali from a reservoir 100 as required.

This pH control system is arranged to operate automatically so as to maintain the pH value of the water being circulated around the circulation path 20 in the region of 7.0. The destruction of bacteria and other organisms by the metal ions produced in the chamber 76 appears to be at its best when the circulating water is neutral or slightly acid.

The downstream ion exchange column 66 acts in the manner of a temporary storage device for ions produced in the ionising chamber 76. That column contains ion exchange resin beads (e.g. beads commercially available as SEPHADEX beads) of a pore size suitable for holding silver ions. Ions detach themselves from the resin beads and attach themselves instead to bacteria passing by, the vacant ion sites so created in the resin beads then taking up other ions passing by from the ion releasing chamber. This device ensures close and immediate contact between bacteria and newly formed ions. The construction of this device is similar to that to be described later with reference to the Figure 6.

In order to maintain the quality of the water circulating around the flow circuit 20, a small proportion of the unevaporated water collected in the outlet of the evaporative cooling unit 26 is bled off via a bleed-off pipe 102. In order to replace that lost water, and to make up for the water lost in evaporation and water droplets, make-up water is admitted to the circulation circuit 20 via the make-up circuit 70. The make-up water is first filtered in the pre-filter 74, and then passes through the ion exchange resin column system 72. The pre-filter may be of the sand bed type where unpressurised large volumes of river water are to be used, or of the cylindrical ceramic "filter candle" type where a lower volume, pressurised supply source is to be used.

The pre-filter 74 is provided wherever the make-up water is turbid or contains a significant amount of organic material, as may be the case with river water, which is frequently used for power station cooling systems. Such a pre-filter extracts from the make-up water suspended particles that would otherwise attract and hold charged silver ions, so preventing such ions from attacking and destroying undesirable bacteria and other organisms.

Depending on the nature of the make-up water supply, that ion exchange system may include, as necessary, separate ion exchange resin columns for removing as required phosphates, sulphides and/or chlorides. Such compounds have been found to have an adverse influence on the effectiveness of the system in killing, damaging and/or preventing from reproducing respiratory disease causing bacteria and other organisms.

Each such column is intended to remove one of those three types of compound, and typically comprises as shown in the **Figure 6** a vertical column 72A through which make-up water admitted through an upper port 72B descends to a lower port 72C through a filling 72D of appropriate ion exchange resin beads having an appropriate molecular pore size. Those beads are confined against escape by gauze filters 72E, 72F which cover the inlet and outlet ports. The resin beads may comprise those commercially available in the UK as SEPHADEX beads.

The effectiveness of the system in destroying, or otherwise rendering innocuous, undesirable bacteria and other organisms is adversely affected by the presence of **phosphates** in the circulating water in concentrations greater than 1/15 of a gram per litre of water. Hence, the need for the phosphate removing ion exchange column where appropriate.

Likewise, **sulphides**, particularly those of iron and hydrogen, have a similar adverse effect, so that sulphides should be removed from the make-up water so far as possible.

**Chlorides** also adversely affect system performance when present in concentrations greater than 10 parts per million (by weight), so that likewise where appropriate they should be removed from the make-up water. A separate chloride removal ion exchange column may be used, although if desired chlorides may be removed by the columns provided for removing phosphates and sulphides, by incorporating in them resin beads of appropriate molecular pore size.

The ion exchange resin columns need replacement in the course of time, when all of the available ion sites become filled.

If desired, a bypass duct as shown in dotted form at 106, may be connected in parallel with the ion release chamber 76, so as to allow the circulation of water around the circuit 20 to continue whilst the flow through that chamber is cut off in order to permit the replacement of the electrodes 80,82. Alternatively, a second and similar decontaminating device may be connected in such a by-pass duct to permit ion release to continue whilst the electrode system in one of the decontaminating devices is replaced.

In the above described apparatus, the decontaminating device 64 should be located as near as possible to, or even in the discharge means 30.

The present invention also finds application in relation to evaporative, water recirculating systems in which the evaporative device (26) has as its primary function the introduction of moisture into a stream of atmospheric air, rather than that of cooling water which has absorbed heat from a heat source. Such an arrangement would be represented schematically by that shown in the **Figure 4**, but with the heat exchanger 10 omitted, and the pump 28 delivering water directly to the discharge means 30.

In the **Figure 7** there is shown schematically the arrangement of a self-contained air humidifying apparatus embodying the present invention. A humidifying chamber 110 has uppermost air inlet and outlet ducts 112, 114, and provides lowermost a collection tray 116 for collecting water for recirculation. A pump 118 draws water from that tray and delivers it through a decontaminating unit 120 to a discharge nozzle 122. That nozzle is arranged to direct the discharging water on to the upper surface of a horizontal disc 124 that is arranged for rotation at high speed about its vertical axis by means of an electric driving motor 126.

A fan 128 mounted above the rotating disc is driven by the motor 126 and creates a flow of air through the humidifying chamber 110

The decontaminating unit 120 is similar to, and operates in a manner similar to that already described with reference to the earlier figures, so as to kill or otherwise render innocuous respiratory disease causing bacteria and other organisms present in the water being recirculated.

Make-up water is supplied to the humidifying chamber 110 through a make-up circuit 130, which may include as necessary or desirable ion exchange resin columns similar to those already described above, for removing as necessary sulphates, sulphides and/or chlorides.

Impingement of the discharging water on to the disc surface causes the water to be broken up into small droplets which become air borne and thus are carried away by the air flowing out of the outlet duct 114.

Despite the preponderance of pipework systems made of non-metallic materials in modern installations, it has been found surprisingly that, contrary to earlier belief, the ion releasing decontaminating units described above function well and efficiently in metal pipework systems, and without any substantial plating-out on to the interior surfaces of the metal pipework.

## Claims

1. A water recirculating apparatus comprising:
(a) a water discharge means for discharging water into an evaporation zone through which atmospheric air may flow in contact with said water to thereby effect evaporation therefrom;
(b) means for breaking up the discharging water flow so as to release into the surrounding air droplets of water including, inter alia, fine water droplets of ten micro-meters or less diameter, thereby to increase the free water surface area available for evaporation;
(c) means for causing a forced flow of atmospheric air through said zone, which flow carries water droplets away from said zone;
(d) collection means for collecting unevaporated water exiting from said zone;
(e) duct means interconnecting said collection means and said discharge means; and
(f) pump means connected in said duct means for returning water from said collecting means through said duct means to said discharge means;
**characterised by** -
(g) an infectivity reducing means arranged to reduce the aerial dissemination from said evaporation zone of infective bacteria which if inhaled by human beings cause Legionaires disease and other related respiratory diseases, which infectivity reducing means comprises:
(i) an electrolytic ion-generating means connected in that part of the apparatus comprising said duct means and said discharge means and arranged to carry water flowing towards said discharge means through said part, and
(ii) controllable electrical switching means for connecting said ion generating means with a source of unidirectional or oscillating electric potential, thereby to cause said ion generating means to electrolytically release into water flowing therethrough silver ions at a release rate sufficient to produce in water leaving the discharge means a predetermined concentration of silver ions sufficient to kill or render innocuous, particularly in any fine water droplets that escape from said zone, said respiratory disease causing bacteria, thereby to render non-dangerous to human beings any respiratorily inhaled fine water droplets that have escaped from the apparatus.

2. An apparatus according to claim 1, wherein said ion generating means is connected in said duct means adjacent to and upstream of said discharge means.

3. An apparatus according to claim 1 or 2, wherein said duct means includes a main duct and a by-pass duct connected in parallel relationship with said main duct, and wherein said ion generating means is connected in at least one of said main and by-pass ducts.

4. An apparatus according to any preceding claim, wherein said duct means comprises a metal duct means.

5. An apparatus according to any preceding claim, wherein said ion generating means is also arranged to release into said flowing water ions of at least one of the metals copper and zinc, at a release rate sufficient to produce in water leaving said discharge means a predetermined concentration of ions of that metal sufficient to kill or render innocuous algae, slime mould and/or other organisms which assist the development of the bacteria Legionella Pneumophila.

6. An apparatus according to any preceding claim, wherein said ion generating means comprises a chamber connected in serial manner in said duct means, at least one pair of opposed, metal electrode systems spaced apart in said chamber, and electrical connection means for connecting said electrode systems with said switching means.

7. An apparatus according to any preceding claim, including a make-up water pipe for supplying make-up water to said apparatus, and a means disposed in serial relation with said make-up water pipe, for removing undesirable materials comprising at least one from a group including phosphates, sulphides and chlorides from make-up water flowing therethrough into said apparatus.

8. An apparatus according to claim 7, wherein said means for removing said undesirable materials from make-up water flowing therethrough into said apparatus comprises an ion exchange column which incorporates beads of an ion exchange resin adapted to capture said undesirable materials.

9. An apparatus according to any preceding claim, including a make-up water pipe for supplying make-up water to said apparatus, and a pre-filter disposed in serial relationship with said make-up water pipe, for removing organic matter from make-up water flowing therethrough into said apparatus.

10. An apparatus according to claim 9, wherein said pre-filter is of the sand bed type, or of the filter candle type.

11. An apparatus according to any preceding claim, wherein said ion generating means is connected in said duct means, and including in said duct means downstream of said ion generating means an ion exchange column which incorporates ion exchange resin beads of a pore size suitable for holding released metal ions in readiness for their attachment to bacteria or other organisms present in the water flowing through that column.

12. An apparatus according to any preceding claim, including monitoring means for monitoring the pH value of the water circulating in said apparatus, and means responsive to an output signal of said monitoring means and operative automatically to admit correcting quantities of an acid or an alkali as required into the circulating water in a manner such as to maintain the monitored pH value substantially at a preset value.

13. An apparatus according to any preceding claim, which apparatus constitutes a vaporising unit of an air humidifying plant, said flow of atmospheric air through said evaporating zone being humidified by water vapour evaporated from said water passing through said zone and being discharged from that zone as an humidified air output of the humidifying plant.

14. An apparatus according to any one of the claims 1 to 12, including a heat source connected in said duct means, from which source heat is to be extracted by water flowing through said duct means, and which heat is to be dissipated from said water by evaporation in said evaporation zone.

15. An apparatus according to claim 14, wherein said heat source comprises a heat exchanger which constitutes part of a refrigeration unit.

16. An apparatus according to claim 15, wherein said refrigeration unit constitutes part of an air conditioning unit.

17. An apparatus according to claim 14, wherein said heat source comprises a water cooling circuit of a steam condensing unit having a steam flow circuit through which steam is passed in contact with said water cooling circuit to transmit heat from said steam to water flowing in said cooling circuit to thereby condense the steam.

18. An apparatus according to any preceding claim, wherein said means for breaking up the discharging water comprises an impingement surface means against which the discharging water is caused to impinge.

19. An apparatus according to claim 18, wherein said impingement surface means comprises a series of spaced, overlapping, mutually-inclined, stationary slats against which said discharging water successively impinges.

20. An apparatus according to any one of the claims 1 to 17, wherein said means for breaking up the discharging water comprises at least one moving solid surface on to which said discharging water is directed by said discharging means.

21. An apparatus according to claim 20, wherein said moving surface comprises a surface of a rotating disc.

22. An apparatus according to any preceding claim, further comprising:
(a) an acid reservoir for storing an acid material;
(b) an alkali reservoir for storing an alkali material;
(c) selection valve means for selectively connecting one or the other of said reservoirs with said duct means;
(d) monitoring means connected with said duct means for monitoring the pH value of the water flowing in said duct means and producing an output signal dependent on said pH value; and
(e) interconnecting means interconnecting said monitoring means and said selection valve means thereby to cause said selection valve means to respond to said output signal and connect said acid reservoir or said alkali reservoir alternatively to said duct means in response to changes in said pH value relative to a preset value, thereby to automatically admit correcting quantities of an acid material or an alkali material as required into said duct means in a manner such as to maintain in a closed loop manner the monitored pH valued substantially at said preset value.

23. An apparatus according to any preceding claim, wherein said predetermined concentration of silver ions is less than one part per ten million parts of water by weight.

24. A method of operating a water recirculating apparatus, which method includes the steps of:-
(a) discharging a recirculating flow of water into an evaporation zone through which atmospheric air may pass in contact with the discharging water;
(b) breaking up the flow of discharging water in said zone so as to release into the surrounding air droplets of water including, inter alia, fine water droplets of ten micro-meters or less diameter thereby to increase the free water surface area available for evaporation;
(c) causing a forced flow of atmospheric air through said zone, which flow carries water droplets away from said zone; and
(d) collecting unevaporated water exiting from said zone and recirculating it through duct means for re-use in step
(a) above;
**characterised by:**
(e) infectivity reducing steps arranged to reduce the aerial dissemination from said evaporation zone of infective bacteria which if inhaled by human beings cause Legionaires disease and other related respiratory diseases, which infectivity reducing steps comprise -
(i) passing the recirculating water before its re-use in said step (a) through an electrolytic ion-generating means;
(ii) energising said ion generating means from a source of uni-directional or oscillating electric potential thereby to cause the ion generating means to electrolytically release into the recirculating water silver ions at a release rate sufficient to produce in water being discharged into said evaporation zone a predetermined concentration of silver ions sufficient to kill or render innocuous, particularly in any fine water droplets that escape from said zone, said respiratory disease causing bacteria, thereby to render non-dangerous to human beings any respiratorily inhaled fine water droplets that have escaped from said zone.

25. A method according to claim 24, including the step of causing said ion generating means to electrolytically release ions of at least one of the metals copper and zinc into said flowing water at a release rate sufficient to produce in water being discharged into said evaporation zone a predetermined concentration of ions of that metal sufficient to kill or render innocuous algae, slime mould and other organisms which assist the development of the bacteria Legionella Pneumophila.

26. A method according to claim 24 or 25, including the steps of supplying make-up water, treating that make-up water so as to substantially remove therefrom undesirable materials comprising at least one from a group comprising phosphates, sulphides and chlorides, and feeding the treated make-up water into the recirculating water.

27. A method according to claim 26, wherein the phosphate concentration in the recirculating water is maintained at less than 1/15 gram per litre of water.

28. A method according to claim 26, wherein the chloride concentration in the recirculating water is maintained at less than 10 parts per million.

29. A method according to claim 26, wherein the sulphides in the recirculating water are reduced to the lowest extent possible.

30. A method according to any one of the claims 24 to 29, comprising the further steps of:
(a) monitoring deviation from a preset value of the pH value of the water flowing in said duct means; and
(b) admitting into said duct means correcting quantities of an acid material or an alkali material in dependence on said deviation and in such a manner as to automatically maintain the monitored pH value substantially at said preset value.

31. A method according to claim 30, wherein said pH value is maintained substantially at a value of 7.0 to thereby maintain the water flowing in said duct means neutral or slightly acidic.

32. A method according to any one of the claims 24 to 31, wherein said predetermined concentration of silver ions is less than one part per ten million parts of water by weight.

## Patentansprüche

1. Wasserumlaufvorrichtung mit:
(a) einer Wasserauslaufeinrichtung für den Abfluß von Wasser in eine Verdunstungszone, durch welche atmosphärische Luft in Kontakt mit dem Wasser fließen kann, um eine Verdunstung zu bewirken;
(b) Mitteln zum Aufbrechen des abfließenden Wasserstroms, um in die Umgebungsluft Wassertropfen abzugeben, einschließlich u.a. kleine Wassertropfen von 10 µm Durchmesser oder weniger, um hierdurch die für die Verdunstung verfügbare freie Wasseroberfläche zu vergrößern;
(c) Mitteln zur Erzeugung einer Strömung atmosphärischer Luft durch jene Zone, wobei die Strömung Wassertröpfchen aus dieser Zone wegträgt;
(d) einer Sammelvorrichtung zum Sammeln aus dieser Zone austretenden, nicht verdunsteten Wassers;
(d) Leitungen zum Verbinden der Sammelvorrichtung und der Auslaufvorrichtung; sowie
(f) eine Pumpvorrichtung in der Leitung für die Rückführung von Wasser aus der Sammelvorrichtung durch die Leitung zur Auslaufvorrichtung;
**gekennzeichnet durch**
(g) eine die Infektiösität verringernde Vorrichtung der Infektiösität zum Reduzieren der Freisetzung von infektiösen, bei Einatmung durch den Menschen die Legionärs-Krankheit oder andere Krankheiten der Atemwege verursachenden Bakterien aus der Verdunstungszone, wobei die die Infektiösität verringernde Vorrichtung umfaßt:
(i) einen elektrolytischen Ionenerzeuger in jenem Teil der Vorrichtung, welche die Leitung und die Auslaufvorrichtung umfaßt und derart angeordnet ist, um durch jenen Teil zur Auslaufvorrichtung fließendes Wasser zu führen, und
(ii) steuerbare elektrische Schaltmittel zum Anschluß des Ionenerzeugers an eine Quelle elektrischen Gleichstrom- oder Wechselstrompotentials, um den Ionenerzeuger zu veranlassen, in das hindurchfliegende Wasser elektrolytisch Silberionen mit einer Freisetzungsrate abzugeben, welche ausreicht, um in dem die Auslaufvorrichtung verlassenden Wasser eine vorgegebene Konzentration von Silberionen zu erzeugen, welche genügt, um insbesondere in jeglichen, aus der Zone entweichenden kleinen Wassertröpfchen, die die Atemwegserkrankungen verursachenden Bakterien abzutöten oder unschädlich zu machen und hierdurch aus der Vorrichtung entwichene und über die Atmung inhalierte feine Wassertröpfchen für Menschen ungefährlich zu machen.

2. Vorrichtung nach Anspruch 1, in der der Ionenerzeuger in der Leitung benachbart und stromaufwärts von der Auslaufvorrichtung angeordnet ist.

3. Vorrichtung nach Anspruch 1 oder 2, bei der die Leitung eine Hauptleitung und eine zu dieser parallel angeordnete Bypaßleitung umfaßt und wobei der Ionenerzeuger zumindest in einer dieser Haupt- und Bypaßleitungen vorgesehen ist.

4. Vorrichtung nach einem der vorangehenden Ansprüche, bei der die Leitung eine metallische Leitung aufweist.

5. Vorrichtung nach einem der vorangehenden Ansprüche, bei der der Ionenerzeuger auch zur Freigabe von Ionen wenigstens eines der Metalle Kupfer und Zink in den Wasserstrom vorgesehen ist und zwar mit einer Freigaberate, welche ausreicht, um in dem die Auslaufvorrichtung verlassenden Wasser eine vorgegebene Ionenkonzentration jenes Metalls zu erzeugen, welche genügt um Algen, Schleim- und Schimmelpilze und/oder andere die Entwicklung des Bakteriums Legionella Pneumophila unterstützende Organismen abzutöten oder unschädlich zu machen.

6. Vorrichtung nach einem der vorangehenden Ansprüche, bei der der Ionengenerator eine in Reihe mit der Leitung angeordnete Kammer, wenigstens zwei in der Kammer im Abstand gegenüberstehende Metallelektroden sowie elektrische Anschlußmittel zum Anschluß des Elektrodensystems an die Schaltvorrichtung aufweist.

7. Vorrichtung nach einem der vorangehenden Ansprüche, mit einem Zusatzwasserrohr zur Zufuhr von Zusatzwasser zur Vorrichtung sowie in Reihe mit dem Zusatzwasserrohr angeordneten Mitteln für die Entfernung unerwünschter Stoffe, einschließlich wenigstens eines Stoffes aus der Gruppe umfassend Phosphate, Sulfide und Chloride, aus dem hierdurch zur Vorrichtung fließenden Wasser.

8. Vorrichtung nach Anspruch 7, **dadurch gekennzeichnet,** daß die Mittel zur Entfernung unerwünschter Stoffe aus dem durch diese zur Vorrichtung fließenden Zusatzwasser eine Ionenaustauschkolonne umfassen, welche Kugeln aus einem Ionenaustauschharz enthält, welche die ungewünschten Stoffe einfangen.

9. Vorrichtung nach einem der vorangehenden Ansprüche, mit einem Zusatzwasserrohr für die Zufuhr von Zusatzwasser zur Vorrichtung und einem in Reihe mit dem Zusatzwasserrohr angeordneten Vorfilter zum Entfernen organischer Stoffe aus dem zur Vorrichtung hindurchfließenden Zusatzwasser.

10. Vorrichtung nach Anspruch 9, bei der das Vorfilter von der Art eines Sandbettes oder einer Filterkerze ist.

11. Vorrichtung nach einem der vorangehenden Ansprüche, bei der der Ionengenerator in der Leitung angeordnet ist und welche in der Leitung stromabwärts vom Ionengenerator eine Ionenaustauschsäule mit Ionenaustauschharzkugeln von einem Porendurchmesser aufweist, der zum Festhalten freigegebener Metallionen geeignet ist, welche auf ihre Anlagerung an Bakterien oder andere in dem durch die Kolonne fließenden Wasser vorhandene Organismen warten.

12. Vorrichtung nach einem der vorangehenden Ansprüche mit einer Überwachungseinrichtung zum Überwachen des pH-Wertes des in der Vorrichtung umlaufenden Wassers sowie auf das Ausgangssignal der Überwachungsvorrichtung ansprechenden Mitteln für die automatische Zufuhr korrigierender bedarfsabhängiger Mengen einer Säure oder Lauge in das Umlaufwasser in der Weise, um den überwachten pH-Wert auf praktisch einem vorgegebenen Wert zu halten.

13. Vorrichtung nach einem der vorangehenden Ansprüche, welche eine Verdampfungseinheit einer Luftbefeuchtungsanlage bildet, wobei der atmosphärische Luftstrom durch die Verdunstungszone durch Wasserdampf befeuchtet wird, der aus dem durch die Zone fließenden Wasser verdunstet und die aus der Zone abziehende Luft als befeuchtete Auslaßluft der Befeuchtungsanlage abgegeben wird.

14. Vorrichtung nach einem der Ansprüche 1 bis 12 mit einer Wärmequelle in der genannten Leitung, wobei durch das die Leitung durchfließende Wasser der Quelle Wärme entzogen wird, welche vom Wasser durch Verdunstung in der Verdunstungszone abgegeben wird.

15. Vorrichtung nach Anspruch 14, **dadurch gekennzeichnet,** daß die Wärmequelle einen Wärmetauscher enthält, der Teil einer Kühlanlage ist.

16. Vorrichtung nach Anspruch 15, bei der die Kühlanlage Teil einer Luftklimatisierungsanlage ist.

17. Vorrichtung nach Anspruch 14, bei der die Wärmequelle einen Wasserkühlkreislauf eines Dampfkondensators mit einem Dampfkreislauf aufweist, durch welchen Dampf in Kontakt mit dem Wasserkühlkreislauf geleitet wird, um Wärme aus dem Dampf auf das in dem Kühlkreislauf fließende Wasser zu übertragen und hierdurch den Dampf zu kondensieren.

18. Vorrichtung nach einem der vorangehenden Ansprüche, bei der die Einrichtung zum Aufbrechen des Abflußwassers Auftreffoberflächen aufweist, auf welche das ausfließende Wasser aufschlägt.

19. Vorrichtung nach Anspruch 18, bei der die Auftreffflächen eine Gruppe von im Abstand angeordneten, einander überlappenden, gegeneinander geneigten stationären Platten aufweist, auf welche das Abflußwasser nacheinander auftrifft.

20. Vorrichtung nach einem der Ansprüche 1 bis 17, bei der die Einrichtung zum Aufbrechen des Abflußwassers wenigstens eine sich bewegende feste Oberfläche aufweist, auf welche die Auslaufvorrichtung das Abflußwasser richtet.

21. Vorrichtung nach Anspruch 20, **dadurch gekennzeichnet,** daß die bewegliche Oberfläche die Oberfläche einer rotierenden Scheibe aufweist.

22. Vorrichtung nach einem der vorangehenden Ansprüche, welche ferner umfaßt:
a) einen Säurebehälter zur Speicherung von saurem Material;
b) einen Laugenbehälter zur Speicherung von alkalischem Material;
c) eine Auswahlventilvorrichtung zum selektiven Anschluß des einen oder des anderen Behälters an die Leitung;
d) an die Leitung angeschlossene Überwachungsmittel zur Überwachung des pH-Wertes des in der Leitung fließenden Wassers und zur Erzeugung eines vom pH-Wert abhängigen Ausgangssignals; sowie
e) Verbindungsmittel zum Anschluß der Überwachungsmittel und der Auswahlventileinrichtung, um hierdurch die Auswahlventileinrichtung auf das Ausgangssignal ansprechen zu lassen und bei Änderungen des pH-Werts gegenüber einem vorgegebenen Wert alternativ den Säurebehälter oder den Laugenbehälter an die Leitung anzuschließen und hierdurch je nach Bedarf automatisch Korrekturmengen eines sauren oder eines alkalischen Materials der Leitung in einer Weise zuzuführen, um in einem geschlossenen Regelkreis den überwachten pH-Wert praktisch auf dem vorgegebenen Wert zu halten.

23. Vorrichtung nach einem der vorangehenden Ansprüche, bei der die vorgegebene Konzentration der Silberionen kleiner als ein Teil pro 10 Millionen Gewichtsteile Wasser ist.

24. Verfahren zum Betrieb einer Wasserumlaufanlage mit folgenden Verfahrensschritten:
a) Abfluß eines Umlaufwasserstroms in eine Verdunstungszone, durch welche atmosphärische Luft in Kontakt mit dem Abflußwasser strömen kann;
b) Aufbrechen des Abflußwasserstroms in der Zone zur Freigabe von Wassertröpfchen einschließlich u.a. kleiner Wassertröpfchen von 10 µm Durchmesser oder weniger in die Umgebungsluft, um hierdurch die für die Verdunstung verfügbare freie Wasseroberfläche zu vergrößern;
c) Erzeugen eines Stroms atmosphärischer Luft durch die Zone, welcher die Wassertröpfchen aus der Zone wegträgt; und
d) Sammeln des nicht verdunsteten, aus der Zone austretenden Wassers und dessen Rückführung durch eine Leitung für die Wiederbenutzung in obigem Schritt (a);
**gekennzeichnet durch**
e) die Infektiösität verringernde Schritte zur Reduzierung der Abgabe infektiöser, bei Einatmung durch den Menschen die Legionärs-Krankheit oder andere zugehörige Erkrankungen der Atemwege verursachender Bakterien aus der Verdunstungszone, wobei diese die Infektiösität verringernden Schritte umfassen -
i) Durchleiten des umlaufenden Wassers vor seiner Wiederbenutzung im Schritt (a) durch einen elektrolytischen Ionenerzeuger;
ii) Erregung des Ionenerzeugers aus einer Quelle elektrischen Gleichstrom- oder Wechselstrompotentials und hierdurch elektrolytische Freigabe von Silberionen durch den Ionengenerator in das Umlaufwasser mit einer Freigaberate, welche ausreicht, um in dem in die Verdunstungszone abfließenden Wasser eine vorgegebene Konzentration von Silberionen zu erzeugen, welche genügt, um insbesondere in aus dieser Zone entweichenden feinen Wassertröpfchen enthaltene, die Atemwegserkrankungen verursachende Bakterien abzutöten oder unschädlich zu machen und hierdurch jegliche durch Einatmung inhalierte, aus jener Zone entwichene feine Wassertröpfchen für den Menschen ungefährlich zu machen.

25. Verfahren nach Anspruch 24 mit dem Schritt der elektrolytischen Freigabe von Ionen wenigstens eines der Metalle Kupfer und Zink durch den Ionengenerator in das fließende Wasser mit einer Freisetzungsrate, welche ausreicht, um in dem in die Verdunstungszone abfließenden Wasser eine vorgegebene Ionenkonzentration jenes Metalls zu erzeugen, welche genügt, um Algen, Schleimpilze und andere die Entwicklung des Bakteriums Legionella Pneumophila unterstützende Organismen abzutöten oder unschädlich zu machen.

26. Verfahren nach Anspruch 24 oder 25 mit den Schritten der Zufuhr von Zusatzwasser, der Behandlung des Zusatzwassers, um aus diesem unerwünschte Stoffe mit wenigstens einem Stoff aus der Gruppe umfassend Phosphate, Sulfide und Chloride im wesentlichen zu entfernen, und Einspeisung des behandelten Zusatzwassers in das Umlaufwasser.

27. Verfahren nach Anspruch 26, **dadurch gekennzeichnet,** daß die Phosphatkonzentration im Umlaufwasser bei weniger als 1/15 Gramm pro Liter Wasser gehalten wird.

28. Verfahren nach Anspruch 26, wobei die Chloridkonzentration im Umlaufwasser auf weniger als 10 Teile pro Million Wasserteile gehalten wird.

29. Verfahren nach Anspruch 26, wobei die Sulfide im Umlaufwasser auf den niedrigstmöglichen Wert verringert sind.

30. Verfahren nach einem der Ansprüche 24 bis 29 mit den weiteren Schritten:
a) Überwachung der Abweichung des pH-Werts des in der Leitung fließenden Wassers von einem vorgegebenen Wert; und
b) Zufuhr von korrigierenden Mengen sauren oder alkalischen Materials in Abhängigkeit von jener Abweichung in die genannte Leitung derart, daß der überwachte pH-Wert praktisch auf dem vorgegebenen Wert gehalten wird.

31. Verfahren nach Anspruch 30, wobei der pH-Wert praktisch auf einem Wert von 7,0 gehalten wird, um das Wasser in der Leitung neutral oder leicht sauer zu halten.

32. Verfahren nach einem der Ansprüche 24 bis 31, wobei die vorgegebene Konzentration der Silberionen kleiner als ein Teil pro 10 Millionen Gewichtsteile Wasser ist.

## Revendications

1. Appareil de remise d'eau en circulation comprenant :
(a) un moyen de décharge d'eau pour décharger de l'eau dans une zone d'évaporation à travers laquelle de l'air atmosphérique peut s'écouler en contact avec ladite eau afin d'en effectuer une évaporation;
(b) un moyen brisant l'écoulement d'eau de décharge de façon à libérer dans l'air environnant des gouttelettes d'eau incluant, entre autres, de fines gouttelettes d'eau d'un diamètre de dix micromètres ou moins, afin d'augmenter ainsi la surface libre d'eau disponible pour l'évaporation;
(c) un moyen pour provoquer un écoulement forcé d'air atmosphérique à travers ladite zone, écoulement qui emporte des gouttelettes d'eau à l'écart de ladite zone;
(d) un moyen de collecte pour collecter de l'eau non évaporée sortant de ladite zone;
(e) un moyen de conduit reliant ledit moyen de collecte et ledit moyen de décharge; et
(f) un moyen de pompe relié audit moyen de conduit pour renvoyer l'eau depuis ledit moyen de collecte vers ledit moyen de décharge par ledit moyen de conduit, caractérisé par :
(g) un moyen réduisant le pouvoir infectieux est agencé de manière à réduire la dissémination dans l'air de bactéries infectieuses provenant de ladite zone d'évaporation qui, si elles étaient inhalées par des êtres humains, provoqueraient la maladie des Légionnaires et d'autres maladies respiratoires similaires, ledit moyen de réduction du pouvoir infectieux comprenant :
(i) un moyen électrolytique de génération d'ions relié à la partie de l'appareil qui comprend ledit moyen de conduit et ledit moyen de décharge, en étant agence pour transporter à travers ladite partie l'eau qui s'écoule vers ledit moyen de décharge, et
(ii) un moyen commutateur électrique réglable pour relier ledit moyen génération d'ions à une source de potentiel électrique unidirectionnel ou oscillant, afin d'amener ainsi ledit moyen générateur d'ions à libérer électrolytiquement, dans l'eau qui le traverse, des ions argent selon un débit de libération suffisant pour produire dans l'eau qui quitte le moyen de décharge une concentration prédéterminée d'ions argent suffisante pour tuer ou rendre inoffensives, dans toutes lesdites fines gouttelettes d'eau qui s'échappent de ladite zone, les bactéries provoquant ladite maladie respiratoire afin de rendre sans danger pour les êtres humains toutes les fines gouttelettes d'eau inhalées de manière respiratoire qui se sont échappées de l'appareil.

2. Appareil selon la revendication 1, dans lequel ledit moyen générateur d'ions est relié audit conduit, près dudit moyen de décharge et en amont de celui-ci.

3. Appareil selon la revendication 1 ou 2, dans lequel ledit moyen de conduit inclut un conduit principal, et un conduit de dérivation monté en parallèle avec ledit conduit principal, et dans lequel ledit moyen générateur d'ions est relié à au moins l'un desdits conduits, principal ou de dérivation.

4. Appareil selon l'une quelconque des revendications précédentes, dans lequel ledit moyen de conduit comprend un moyen de conduit métallique.

5. Appareil selon l'une quelconque des revendications précédentes, dans lequel ledit moyen générateur d'ions est également agencé de manière à libérer, dans l'eau qui s'écoule, des ions d'au moins l'un des métaux : cuivre et zinc, selon un débit de libération suffisant pour produire, dans l'eau quittant ledit moyen de décharge, une concentration prédéterminée d'ions de ce métal suffisante pour tuer ou rendre inoffensives les algues, les moisissures de boues et/ou les autres organismes qui favorisent le développement de la bactérie Legionella Pneumophila.

6. Appareil selon l'une quelconque des revendications précédentes, dans lequel ledit moyen générateur d'ions comprend une chambre montée en série avec ledit moyen de conduit, au moins une paire de systèmes d'électrodes métalliques opposés espacés dans ladite chambre, et un moyen de liaison électrique pour relier lesdits systèmes d'électrodes audit moyen de commutation.

7. Appareil selon l'une quelconque des revendications précédentes, incluant une canalisation d'eau d'appoint pour amener de l'eau d'appoint audit appareil, et un moyen disposé en relation de série avec ladite canalisation d'eau d'appoint pour retirer, de l'eau d'appoint qui le traverse vers ledit appareil, des matières indésirables comprenant au moins un élément du groupe incluant des phosphates, des sulfures et des chlorures.

8. Appareil selon la revendication 7, dans lequel ledit moyen retirant, de l'eau d'appoint qui le traverse vers ledit appareil, lesdites matières indésirables, comprend une colonne d'échange d'ions qui incorpore des perles d'une résine d'échange d'ions aptes à capturer lesdites matières indésirables.

9. Appareil selon l'une quelconque des revendications précédentes, incluant une tuyauterie d'eau d'appoint pour amener de l'eau d'appoint audit appareil, et un filtre préalable disposé en série avec ladite tuyauterie d'eau d'appoint pour retirer, de l'eau d'appoint qui le traverse vers ledit appareil, des matières organiques.

10. Appareil selon la revendication 9, dans lequel ledit filtre préalable est du type à lit de sable, ou du type à bougies de filtration.

11. Appareil selon l'une des revendications précédentes, dans lequel ledit moyen générateur d'ions est relié audit moyen de conduit, en incluant dans ledit moyen de conduit, en aval dudit moyen générateur d'ions, une colonne d'échange d'ions qui incorpore des perles de résine d'échange d'ions d'une dimension de pores apte à maintenir prêts à être attachés, à des bactéries ou à d'autres organismes présents dans l'eau traversant cette colonne, des ions métalliques libérés.

12. Appareil selon l'une quelconque des revendications précédentes, incluant un moyen de surveillance pour surveiller la valeur du pH de l'eau circulant dans ledit appareil, et un moyen sensible à un signal de sortie dudit moyen de surveillance et susceptible d'agir automatiquement pour admettre selon les besoins, dans l'eau de circulation, des quantités correctrices d'un acide ou d'un alcali de manière à maintenir sensiblement la valeur surveillée du pH à une valeur préétablie.

13. Appareil selon l'une quelconque des revendications précédentes, constituant une unité d'évaporation d'une installation d'humidification d'air, ledit écoulement d'air atmosphérique à travers ladite zone d'évaporation étant humidifié par de la vapeur d'eau évaporée de l'eau traversant ladite zone et étant déchargé depuis cette zone sous forme de sortie d'air humidifié de l'installation d'humidification.

14. Appareil selon l'une quelconque des revendications 1 à 12, incluant une source thermique reliée audit moyen conducteur, source à partir de laquelle de la chaleur doit être extraite par l'eau traversant ledit moyen conducteur, cette chaleur devant être dissipée de ladite eau par évaporation dans ladite zone d'évaporation.

15. Appareil selon la revendication 14, dans lequel ladite source de chaleur comprend un échangeur de chaleur qui constitue une partie de l'unité de réfrigération.

16. Appareil selon la revendication 15, dans lequel ladite unité de réfrigération fait partie d'une unité de conditionnement d'air.

17. Appareil selon la revendication 14, dans lequel ladite source de chaleur comprend un circuit de refroidissement d'eau d'une unité de condensation de vapeur pourvue d'un circuit d'écoulement de vapeur à travers lequel de la vapeur est envoyée en contact avec ledit circuit de refroidissement d'eau afin de transmettre de la chaleur depuis ladite vapeur à l'eau qui s'écoule dans ledit circuit de refroidissement afin de condenser ainsi la vapeur.

18. Appareil selon l'une quelconque des revendications précédentes, dans lequel ledit moyen brisant l'écoulement d'eau de décharge comprend un moyen de surface de frappe que l'eau de décharge est amenée à frapper.

19. Appareil selon la revendication 18, dans lequel ledit moyen de surface de frappe comprend une série de lattes stationnaires, espacées, se recouvrant, inclinées les unes par rapport aux autres, que ladite eau de décharge vient frapper successivement.

20. Appareil selon l'une quelconque des revendications 1 à 17, dans lequel ledit moyen brisant l'écoulement de l'eau de décharge comprend au moins une surface massive mobile sur laquelle ladite eau de décharge est dirigée par ledit moyen de décharge.

21. Appareil selon la revendication 20, dans lequel ladite surface mobile comprend une surface d'un disque rotatif.

22. Appareil selon l'une quelconque des revendications précédentes, comprenant en outre :
(a) un réservoir d'acide pour emmagasiner une matière acide;
(b) un réservoir d'alcali pour emmagasiner une matière alcaline ;
(c) un moyen de vanne de choix pour relier sélectivement l'un ou l'autre desdits réservoirs audit moyen de conduit;
(d) un moyen de surveillance relié audit moyen de conduit pour surveiller la valeur du pH de l'eau s'écoulant dans ledit moyen de conduit et produire un signal de sortie dépendant de ladite valeur de pH; et
(e) un moyen de liaison reliant entre eux ledit moyen de surveillance et ledit moyen de vanne de choix, afin d'amener ainsi ledit moyen de vanne de choix à répondre audit signal de sortie, et à relier en alternance ledit réservoir d'acide et ledit réservoir d'alcali audit moyen de conduit en réponse à des variations de ladite valeur de pH par rapport à une valeur préétablie, afin d'admettre ainsi automatiquement selon les besoins, dans ledit moyen de conduit, les quantités correctrices d'une matière acide ou d'une matière alcaline de manière à maintenir en boucle d'asservissement fermée, sensiblement à ladite valeur préétablie, la valeur surveillée du pH.

23. Appareil selon l'une quelconque des revendications précédentes, dans lequel ladite concentration prédéterminée en ions argent est inférieure à une partie pour dix millions de parties d'eau en poids.

24. Procédé de mise en oeuvre d'un appareil de remise d'eau en circulation, procédé qui inclut les étapes consistant à :
(a) décharger un écoulement de remise d'eau en circulation dans une zone d'évaporation que de l'air atmosphérique peut traverser en contact avec l'eau de décharge;
(b) briser l'écoulement d'eau de décharge dans ladite zone de façon à libérer, dans l'air environnant, des gouttelettes d'eau incluant, en autres, de fines gouttelettes d'eau d'un diamètre de dix micromètres ou moins afin d'augmenter ainsi la surface libre d'eau disponible pour l'évaporation;
(c) provoquer un écoulement forcé d'air atmosphérique à travers ladite zone, écoulement qui emporte des gouttes d'eau à l'écart de ladite zone; et
(d) collecter de l'eau non évaporée sortant de ladite zone et la remettre en circulation à travers le moyen de conduit pour qu'elle soit réutilisée à l'étape (a) ci-dessus;
caractérisé par :
(e) des étapes de réduction du pouvoir infectieux agencées de manière à réduire la dissémination aérienne, à partir de ladite zone d'évaporation, de bactéries infectieuses qui provoqueraient, si elles étaient inhalées par des êtres humains, la maladie des Légionnaires et d'autres maladies respiratoires similaires, ces étapes de réduction du pouvoir infectieux comprenant le fait:
(i) de faire passer l'eau de remise en circulation, avant sa nouvelle utilisation dans ladite étape (a), à travers un moyen électrolytique générateur d'ions;
(ii) d'exciter ledit moyen générateur d'ions à partir d'une source de potentiel électrique unidirectionnel ou oscillant afin d'amener ainsi le moyen générateur d'ions à libérer électrolytiquement, dans l'eau remise en circulation, des ions argent selon un débit de libération suffisant pour produire dans l'eau en cours de décharge vers ladite zone d'évaporation une concentration prédéterminée d'ions argent suffisante pour tuer ou rendre inoffensives, en particulier dans toutes les fines gouttelettes d'eau qui s'échappent de ladite zone, les bactéries provoquant lesdites maladies respiratoires, afin de rendre sans danger pour les êtres humains toutes fines gouttelettes d'eau inhalées par respiration qui se sont échappées de ladite zone.

25. Procédé selon la revendication 24, incluant l'étape consistant à amener le moyen générateur d'ions à libérer électrolytiquement des ions d'au moins l'un des métaux : cuivre et zinc, dans l'eau d'écoulement selon un débit de libération suffisant pour produire dans l'eau en cours de décharge vers ladite zone d'évaporation une concentration prédéterminée d'ions de ce métal suffisante pour tuer ou rendre inoffensives les algues, les moisissures de boues et les autres organismes qui favorisent le développement de la bactérie Legionella Pneumophila.

26. Procédé selon la revendication 24 ou 25, incluant les étapes consistant à amener de l'eau d'appoint, traiter cette eau d'appoint de façon à en retirer de façon sensible les matières indésirables comprenant au moins une matière du groupe comprenant des phosphates, des sulfures et des chlorures, et amener l'eau d'appoint traitée dans l'eau remise en circulation.

27. Procédé selon la revendication 26, dans lequel la concentration en phosphates de l'eau remise en circulation est maintenue à moins de 1/15 gramme par litre d'eau.

28. Procédé selon la revendication 26, dans lequel la concentration en chlorure de l'eau remise en circulation est maintenue à moins de 10 parties par million.

29. Procédé selon la revendication 26, dans lequel les sulfures sont réduits dans l'eau remise en circulation à la teneur la plus basse possible.

30. Procédé selon l'une quelconque des revendications 24 à 29, comprenant les étapes additionnelles consistant à :
(a) surveiller l'écart, par rapport à une valeur préétablie, de la valeur du pH de l'eau s'écoulant dans ledit moyen de conduit; et
(b) admettre dans ledit moyen de conduit des quantités correctrices d'une matière acide ou d'une matière alcaline en fonction de l'écart, de façon à maintenir automatiquement la valeur surveillée du pH sensiblement à ladite valeur prédéterminée.

31. Procédé selon la revendication 30, dans lequel ladite valeur de pH est maintenue sensiblement à une valeur de 7,0 afin de maintenir ainsi neutre ou légèrement acide l'eau passant dans ledit moyen de conduit.

32. Procédé selon l'une quelconque des revendications 24 à 31, dans lequel ladite concentration prédéterminée en ions argent est inférieure à une partie pour dix millions de parties d'eau en poids.
